# EUROPEAN PATENT SPECIFICATION

(11) **EP 1 927 423 B1**
(45) Date of publication and mention of the grant of the patent: **23.12.2009**
(21) Application number: 06124978.5
(22) Date of filing: 29.11.2006
(51) Int. Cl.: B23K 11/087, B23K 11/02

(54) **Locking device**
Verriegelungsvorrichtung
Dispositif de verrouillage

(43) Date of publication of application: 04.06.2008
(73) Proprietor: Titan Italia S.p.A., 40056 Crespellano BO (IT)
(72) Inventor: Preto, Gianni, 40017, San Giovanni in Persiceto (BO) (IT)
(74) Representative: Crugnola, Pietro

(56) References cited:
- EP-A1- 0 597 215
- US-A1- 2002 011 469

## Description

The invention relates to a welding apparatus, in particulara (pressure-butt electric welding machine) comprising a locking device for locking objects to be welded.

EP 0597215 discloses a flash butt welding machine having a housing and a slide linearly displaceable in the housing. Fitted in the housing and the slide is one clamping system each, with which sectional workpieces (e.g. rails) can be held and positioned. A device for displacing the clamping systems, in particular for upsetting sectional workpieces (e.g. rails), comprises at least one pressure cylinder arranged above the workpiece clamping axis and acting in the longitudinal direction, and at least one lever which is rotatably connected to the slide at the force-application point. The pressure cylinder is connected to one end of the lever. The centre of the lever is connected to the housing in an articulated manner via a tie rod. In this way, the pressure force produced above the rail clamping axis is put into effect in the clamping axis.

Pressure- butt electric welding machines are known comprising locking devices provided with a pair of locking elements between which an object to be welded is locked (See GB-A-116 20 73).

The aforesaid pair of locking elements comprises a fixed element, connected to a bed of the welding machine, and a movable element that can be moved towards and away from the fixed element, in such a way as to have an open configuration in which the movable element is spaced away from the fixed element to enable a welded object to be removed and a further object to be welded to be positioned, and a closed configuration, in which the movable element is brought near the fixed element to lock the object to be welded.

The locking devices disclosed above comprise a frame that supports the movable element.

The frame comprises a first end zone to which the movable element is fixed, an intermediate zone, at which the frame is hinged on the base of the welding machine in a fulcrum, and a second end zone, opposite the first end zone, to which a stem of an actuator is fixed.

In operation, an object to be welded is rested on the fixed element. Subsequently, the aforesaid actuator controls the movement of the movable element from the open configuration to the closed configuration.

A drawback of the locking devices disclosed above consists of the fact that the movable element, by passing from the open configuration to the closed configuration, interacts with a zone of the object to be welded that is nearer the aforesaid fulcrum, but, at least for certain values of the thickness and width of the object to be welded, it does not interact with zones of the object to be welded that are further from the aforesaid fulcrum.

It follows that the locking devices disclosed above do not enable appropriate locking of the object to be welded.

In order to overcome this drawback, the movable element is provided with pressing bodies that are movable transversely to the frame. Adjusting devices are provided that enable the position of each of the pressing bodies to be adjusted with respect to the frame in such a way that the pressing bodies protrude from the frame by a quantity that increases as the distance of the pressing bodies from the aforesaid fulcrum increases.

In this way it is possible to obtain appropriate locking of the objects to be welded both in the zones nearer the aforesaid fulcrum and in the zones further from the aforesaid fulcrum.

The locking devices are, however, very complicated and costly inasmuch as they have to be provided with adjusting devices. Further, the position of the pressing bodies has to be adjusted at each product change in function of the thickness and width of the objects to be welded. A long time is therefore necessary for adjusting the locking devices, which significantly penalises the efficiency of the welding machines.

An object of the invention is to improve known locking devices, in particular the locking devices for welding apparatuses.

A further object is to obtain a locking device that ensures effective locking of an object, without requiring long and complicated adjusting operations.

A further object is to obtain a locking device that enables objects to be effectively locked that have a thickness and a width belonging to a wide dimensional range.

A still further object is to obtain a welding apparatus, in particular a welding apparatus for pressure-butt electric welding, provided with an effective locking device. According to the invention, there is provided a welding apparatus, as disclosed in claim 1.

Owing to this aspect of the invention, it is possible to obtain a welding apparatus in which the first locking means and the second locking means keep substantially parallel to one another during operation.

It follows that the first locking means and the second locking means can lock objects having a thickness and a width belonging to wide dimensional intervals, without long and complex finishing operations being necessary.

In addition, the first locking means and the second locking means exert substantially uniform pressure on all the zones of the object to be welded.

In this way, as the first locking means, or the second locking means, is connected to a source of electric energy, a substantially uniform electric current passes through each of the aforesaid zones, causing almost uniform localised and thus optimal welding.

This does not occur in prior-art electric welding machines inasmuch as the pressing bodies with which the locking devices are provided generate non-uniform passages of currents - and therefore non-uniform localised fusion - in adjacent zones of the object to be welded.

The invention can be better understood and implemented with reference to the attached drawings, which show some embodiments thereof by way of non-limiting example, in which:
Figure 1 is a frontal view of a welding apparatus;
Figure 2 is a partially sectioned schematic frontal view of the welding apparatus in Figure 1;
Figure 3 is a cross section of the welding apparatus in Figure 1, which shows a locking device with which the welding apparatus is provided in a closed configuration;
Figure 4 is a section like the one in Figure 3 that shows the locking device in an open configuration;
Figure 5 is a section taken along a plane V-V of Figure 3;
Figure 6 is a section taken along a plane VI-VI of Figure 4, showing a safety device of the locking device, in a rest configuration;
Figure 7 is a section like the one in Figure 6 showing the safety device in a working configuration.

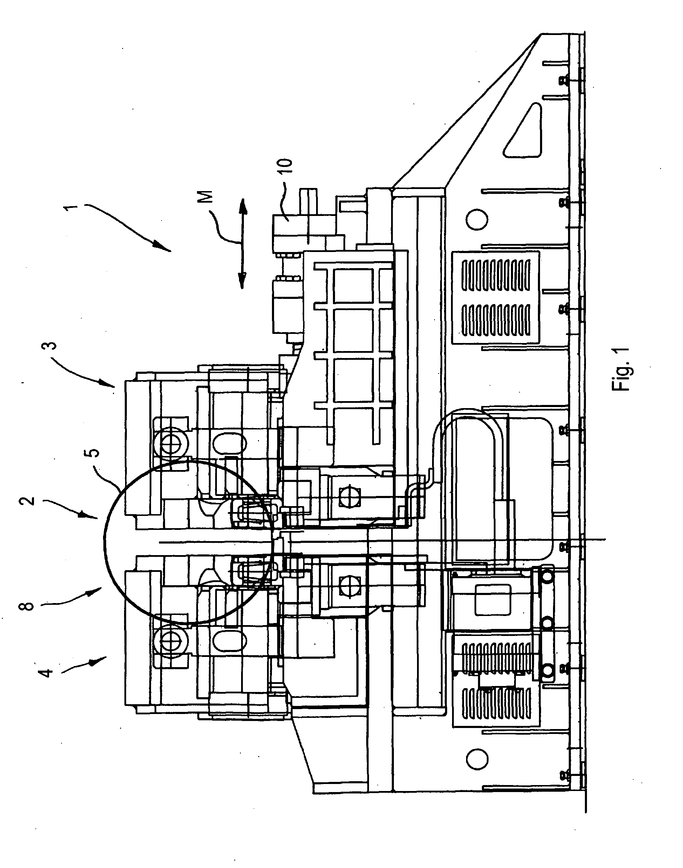

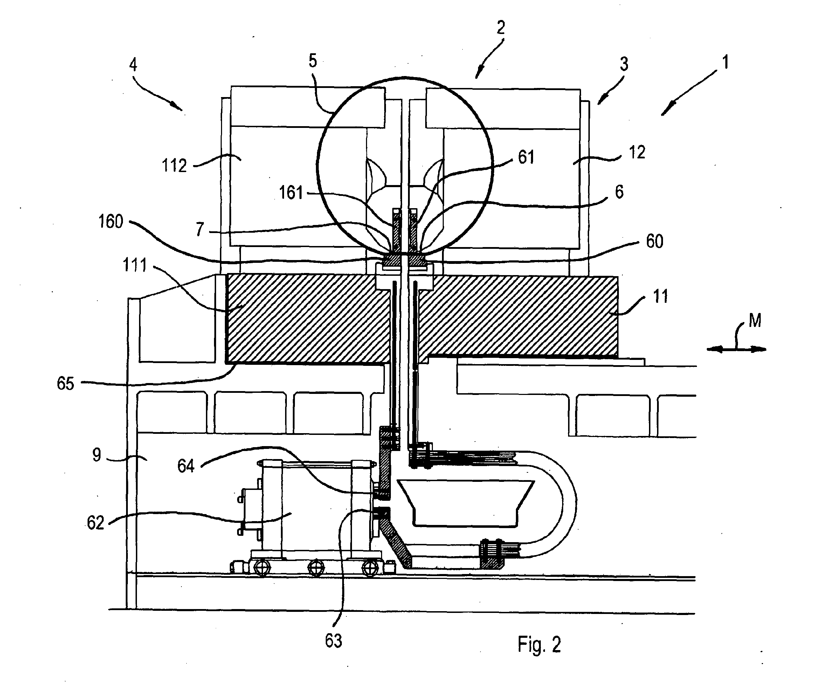

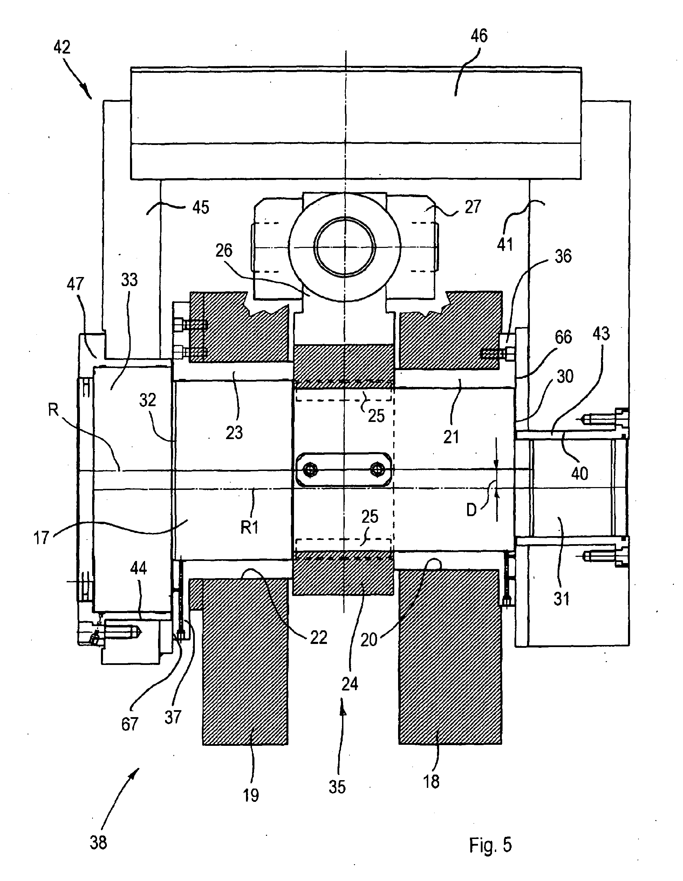

With reference to Figures 1 to 5, there is shown a welding apparatus 1, in particular a pressure-butt electric welding apparatus, comprising a locking device 2 arranged for locking objects to be welded.

The objects to be welded may comprise a metal plate 5 folded in such a way as to have a first edge 6 and a second edge 7 facing one another. In particular, the objects to be welded may be ferrules.

By welding the metal plate 5 in such a way as to join the first edge 6 to the second edge 7 it is possible to obtain a tubular element 8 from which, for example, a rim for vehicles can be obtained.

The objects to be welded may also comprise two distinct metal bodies rather than a single folded metal plate.

The locking device 2 comprises a first locking unit 3 that is movable with respect to a base 9 of the welding apparatus 1 along a movement direction M.

The first locking unit 3 slides on guides 57 of a bed 58 of the base 9.

The locking device 2 further comprises a second locking unit 4 fixed to the base 9.

The locking device 2 is provided with an actuator 10 that moves the first locking unit 3 along the movement direction M towards and away from the first locking unit 3.

The first locking unit 3 comprises a first fixed locking element 11 and a second locking element 12 that is movable along a further movement direction N.

The first locking element 11 is provided with a first elongated element 60, or first clamp, arranged for interacting with the objects to be welded.

The second locking element 12 is provided with a second elongated element 61, or second clamp, arranged for interacting with the objects to be welded.

Similarly to what has been disclosed with reference to the first locking unit 3, the second locking unit 4 comprises a further first locking element 111 that is fixed, and a further second locking element 112 that is movable along the further movement direction N.

The further first locking element 111 is provided with a further first elongated element 160, or further first clamp, arranged for interacting with the objects to be welded.

The further second locking element 112 is provided with a further second elongated element 161, or further second clamp, arranged for interacting with the objects to be welded.

The first elongated element 60, the second elongated element 61, the further first elongated element 160 and the further second elongated element 161 are made of metal.

In particular, the first elongated element 60 and the further first elongated element 160 are made of copper, for example beryllium copper, whilst the second elongated element 61 and the further second elongated element 161 are made of steel.

The welding apparatus 1 further comprises an electric energy supply source, for example a transformer 62 having a first pole 63 connected to the first locking element 11, in particular to the first elongated element 60, and a second pole 64 connected to the further first locking element 111, in particular to the further first elongated element 160.

Between the base 9 and the further first locking element 111 an electrically isolating material 65 is interposed.

When the first edge 6 and the second edge 7 are placed in contact with one another, the metal plate 5, which is locked by the first locking element 11 and by the further first locking element 111, is crossed by an electric current that causes local fusion at the first edge 6 and the second edge 7.

In addition, the actuator 10 presses the first edge 6 against the second edge 7 to promote mutual adhesion.

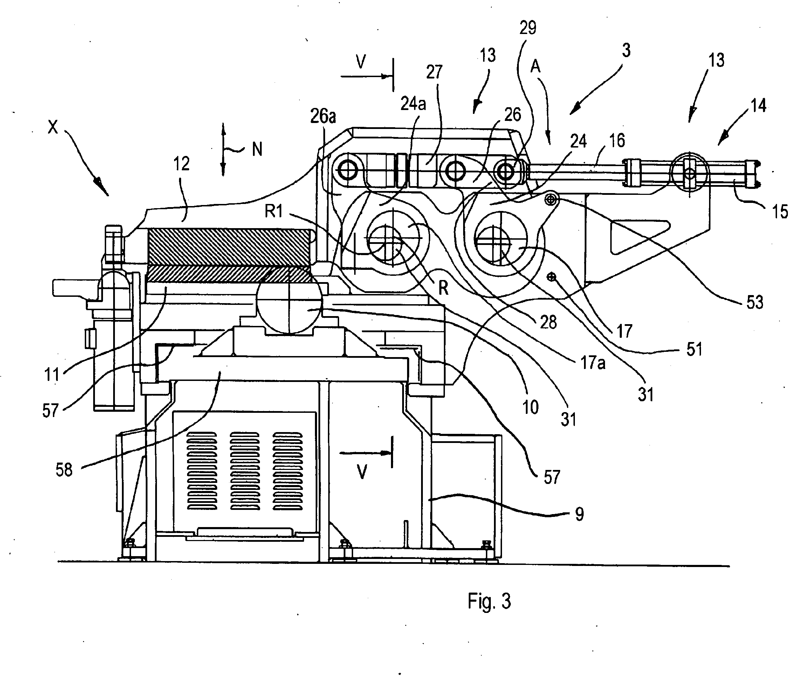

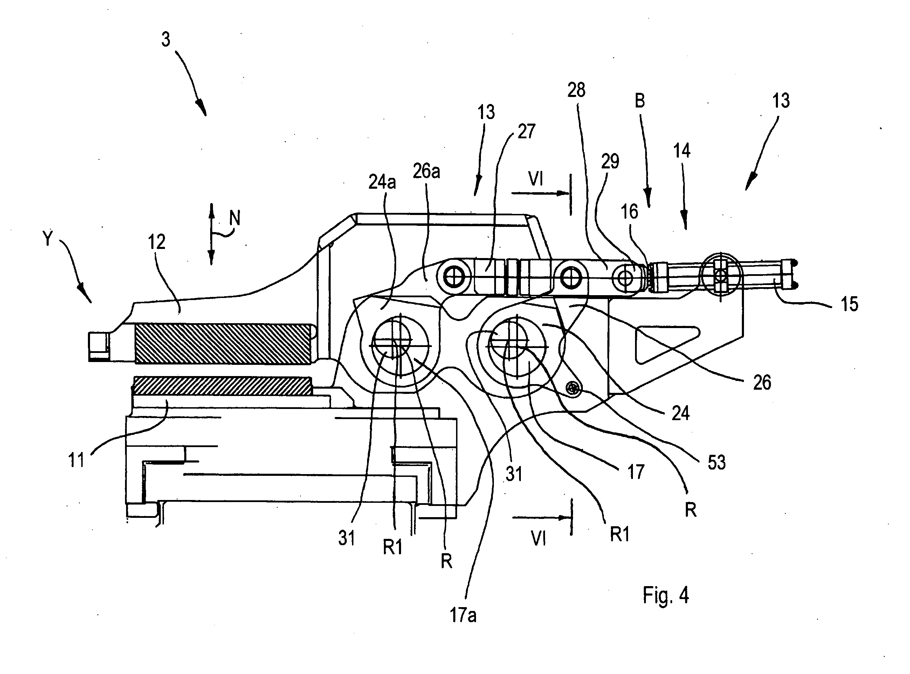

The second locking element 12 is movable between a locking position, indicated by X in Figure 3, in which the first locking element 11 and the second locking element 12 are moved close to lock a zone of the metal plate 5 placed near the first edge 6 (or at least a zone of an object to be welded), and a release position, indicated by Y in Figure 4, in which the first locking element 11 and the second locking element 12 are spaced away from one another in such a way that a metal plate 5 that has just been welded can be removed from the locking device 2 and a further metal plate 5 to be welded can be delivered to the locking device 2.

Similarly, the further second locking element 112 is movable between a further locking position, in which the further first locking element 111 and the further second locking element 112 are moved close to lock a further zone of the metal plate 5 placed near the second edge 7 (or a further zone of another object that has to be welded to the aforesaid object), and a further release position, in which the further first locking element 111 and the further second locking element 112 are spaced away from one another in such a way that the metal plate 5 that has just been welded can be removed from the locking device 2 and a further metal plate 5 to be welded can be delivered to the locking device 2.

The first locking unit 3 comprises a driving device 13 arranged for moving the first locking element 11 from the locking position X to the release position Y, and vice versa. The second locking unit 4 comprises a further driving device arranged for moving the further first locking element 111 from the further locking position to the further release position, and vice versa.

The driving device 13 and the further driving device have substantially the same structure.

The driving device 13 will be disclosed in detail below.

What has been stated regarding the driving device 13 must be understood to also refer to further driving device.

The driving device 13 comprises an actuating device 14 provided with a cylinder 15. Inside the cylinder 15 a piston is slidable from which a stem 16 protrudes.

The actuating device 14 can take on an extended operating configuration, indicated by A in Figure 3, in which the stem 16 projects outside the cylinder 15, and a retracted operating configuration, indicated by B in Figure 4, in which the stem 16 is received inside the cylinder 15.

As will be described in greater detail below, to the extended operating configuration A of the actuating device 14 the locking position X of the second locking element 12 corresponds, whilst the release position Y of the second locking element 12 corresponds to the retracted operating configuration B of the actuating device 14.

The driving device 13 further comprises a first shaft 17 and a second shaft 17a, each of which is rotatably supported by a first supporting element 18 and by a second supporting element 19 fixed to the first locking element 11.

The first supporting element 18 is provided with a first hole 20 in which there is housed a first bush 21, for example a bush made of bronze, which receives the first shaft 17. The first bush 21 is provided with a first flange 36.

The first supporting element 18 is further provided with a further first hole in which there is housed a further first bush, for example a bush made of bronze, which receives the second shaft 17a. The further first bush is provided with a further first flange.

The second supporting element 19 is provided with a second hole 22 in which there is housed a second bush 23, for example a bush made of bronze, which receives the first shaft 17. The second bush 23 is provided with a second flange 37.

The second supporting element 19 is further provided with a further second hole in which there is housed a further second bush, for example a bush made of bronze, which receives the second shaft 17a. The further second bush is provided with a further second flange.

The driving device 13 further comprises a first lever 24 fixed to the first shaft 17 and a second lever 24a fixed to the second shaft 17a.

The first shaft 17 is connected to the first lever 24 through keys 25, whilst the second shaft 17a is connected to the second lever 24a through further keys.

The first lever 24 and the second lever 24a respectively comprise a first appendage 26 and a second appendage 26a hinged on a rod 27.

The rod 27 is provided with an end zone 28 that is rotatably connected to a free end 29 of the stem 16. The actuating device 14, passing from the extended operating configuration A to the retracted operating configuration B, and vice versa, causes a movement of the first appendage 26 and of the second appendage 26a and, consequently, rotation of the first shaft 17 and of the second shaft 17a.

The first supporting element 18 and the second supporting element 19 are spaced from one another along a longitudinal dimension of the shaft 17, in such a way that between the first supporting element 18 and the second supporting element 19 a gap 35 is defined in which the first lever 24 and the second lever 24a are housed.

The first shaft 17 and the second shaft 17a substantially have the same structure.

The first shaft 17 will be disclosed in detail below.

What has been stated regarding the first shaft 17 must be understood to refer also to the second shaft 17a.

Corresponding parts of the first shaft 17 and of the second shaft 17a will be indicated by the same numeric reference.

A first pin 31 is fixed to a first end 30 of the first shaft 17 and a second pin 33 is fixed to a second end 32 of the first shaft 17.

The first pin 31 and the second pin 33 have a substantially cylindrical shape. The first pin 31 has a smaller diameter than a further diameter of the second pin 33. The shaft 17 has a still further diameter that is greater than the aforesaid diameter and less than the aforesaid further diameter.

The first pin 31 and the second pin 33 are substantially coaxial to one another.

The first pin 31 and the second pin 33 have a longitudinal axis R1 that is substantially parallel to a rotation axis R of the first shaft 17, the longitudinal axis R1 being separated from the rotation axis R by a set distance D.

The first pin 31 and the second pin 33 define, in this way, an eccentric device 38 that moves the second locking element 12 between the locking position X and the release position Y, in the manner that will be disclosed below.

The first pin 31 is received in a first seat 40 obtained in an arm element 41 of a frame 42 that supports the second movable element 12.

Between the first pin 31 and the first seat 40 there is interposed a first bush element 43, for example a bush made of bronze, fixed to the first arm element 41.

The second pin 33 is received in a second seat 44 obtained in a second arm element 45 of the frame 42, the second arm element 45 being connected to the first arm element 41 through a crosspiece element 46 to which the second movable element 12 is fixed.

Between the second pin 33 and the second seat 44 there is interposed a second bush element 47, for example a bush made of bronze, fixed to the second arm element 45.

When the actuating device 14 passes from the extended operating configuration A to the retracted operating configuration B, the first shaft 17 and the second shaft 17a rotate with respect to the first supporting element 18 and to the second supporting element 19.

Consequently, as shown from the comparison between Figure 3 and Figure 4, the longitudinal axes R of the first pins 31 and of the second pins 33 move away from the base 9, causing a linear move of the frame 42 - and therefore of the second locking element 12 - to the further movement direction N.

The first arm element 41 is provided with a surface 66 arranged for interacting with the first flange 36 of the first bush 21 and the second arm element 45 is provided with a further surface 67 arranged for interacting with the second flange 37 of the second bush 23.

The first surface 66 and the second surface 67 may run, respectively, on the first flange 36 of the first bush 21 and on the second flange 37 of the second bush 23 for guiding the frame 42, whilst the frame 42 moves along the further movement direction N.

As disclosed above, the driving device 13 comprises the first shaft 17 and the second shaft 17a, this ensures that the second locking element 12 moves along the further movement direction N being maintained always substantially parallel to the first locking element 11.

The welding apparatus 1 operates in the manner disclosed below.

When the first locking unit 3 and the second locking unit 4 are spaced from one another and the second locking element is in the release position Y, a portion of the metal plate 5 placed near the first edge 6 is rested on the first locking element 11. Subsequently, the second locking element 12 is moved from the release position Y to the locking position X in such a way that the first edge 6 protrudes with respect to the first locking element 11 and to the second locking element 12.

In a similar manner, a portion of the metal plate 5 placed near the second edge 7 is locked by the second locking unit 4.

Still subsequently, the first locking unit 3 is moved near the second locking unit 4 in such a way as to press the first edge 6 against the second edge 7 for the entire duration of the welding operations.

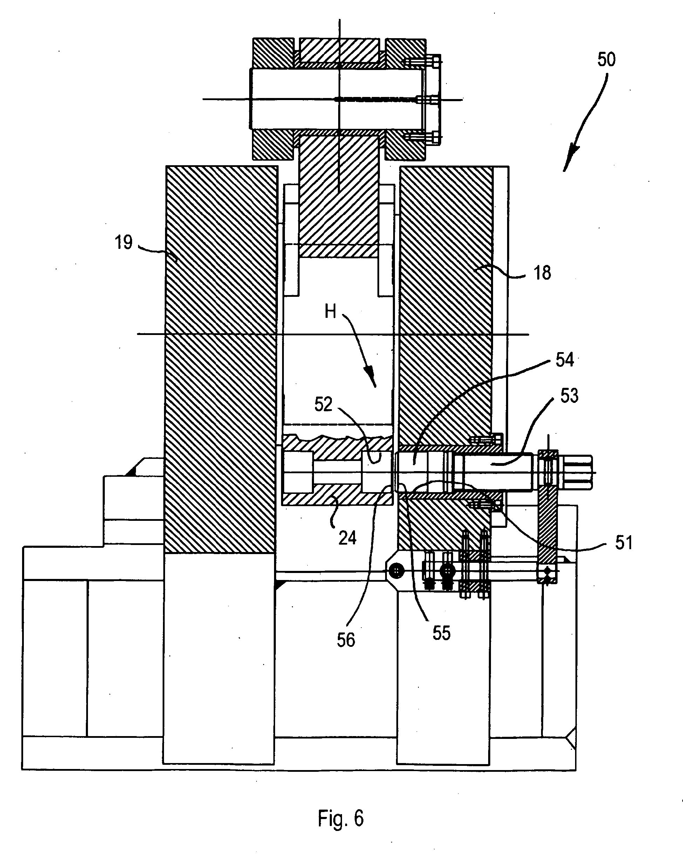

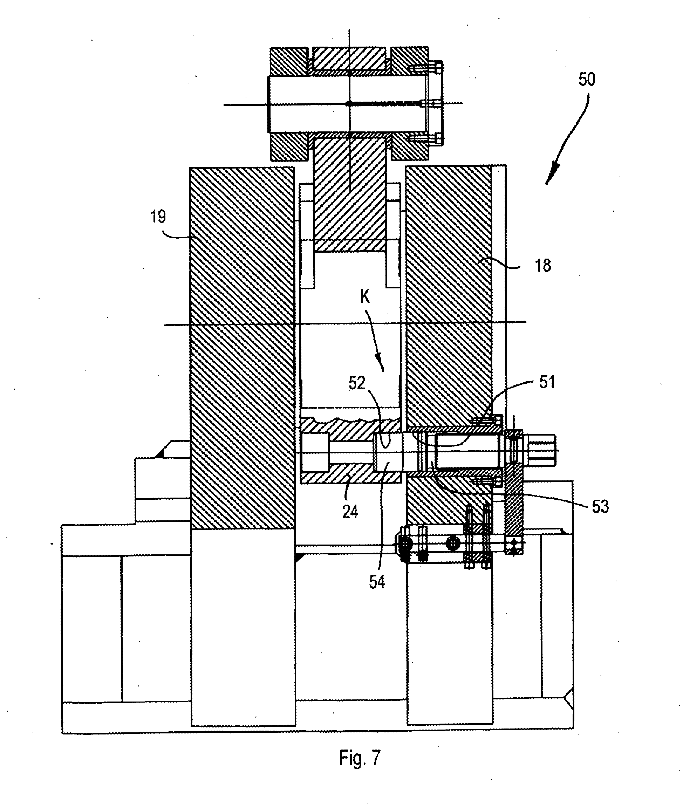

With reference to Figures 6 and 7, there is shown a positioning device 50 arranged for maintaining the second locking element 12 in the release position Y.

The positioning device 50 comprises a first cavity 51 obtained in the first supporting element 18, a second cavity 52 obtained in one of the levers 24 and an elongated body 53 comprising, at an end thereof, an engaging element 54.

As shown in Figure 3, when the actuating device 14 is in the retracted operating configuration B the first cavity 51 and the second cavity 52 are distant from one another.

As shown in Figure 4, when the actuating device 14 is in the retracted operating configuration B the first cavity 51 and the second cavity 52 are aligned and an opening 55 of the first cavity 51 faces a further opening 56 of the second cavity 52.

The elongated body 53 is movable between a rest position H, shown in Figure 6, in which the engaging element 54 is received in the first cavity 51, and a work position K, shown in Figure 7, in which the engaging element 54 protrudes from the first cavity 51 and is received in the second cavity 52.

When the elongated body 53 is in the work position K, the lever 24 cannot rotate with respect to the first supporting element 18.

The positioning device 50, thus acts as a safety means that prevents the second locking element 12 from abandoning the release position Y even in the event of a malfunction of the actuating device 13, such as a loss of operating fluid, for example oil, from the cylinder 15.

The positioning device 50 thus enables cleaning and maintenance tasks to be performed on the first locking element 11 and on the second locking element 12 in safe conditions.

Further positioning device is further provided, similar to the positioning device 50, arranged for maintaining the further second locking element 112 in the further release position.

The locking device 2 that was disclosed above can be installed not only on welding apparatuses, but also on other types of machine tools, such as, for example, machine tools arranged to remove a welding bead from objects to be welded.

## Claims

1. Welding apparatus, comprising a locking device (2) provided with first locking means (11, 111) and second locking means (12, 112) mutually movable between an open configuration (Y), in which between said first locking means (11, 111) and said second locking means (12, 112) an object (5) is positionable, and a closed configuration (X), in which said first locking means (11, 111) and said second locking means (12, 112) lock said object (5), and with driving means arranged for moving said first locking means (11, 111) and said second locking means (12, 112) between said open configuration (Y) and said closed configuration (X), said locking device (2) comprising a first locking unit (3) provided with a first locking element (11) of said first locking means and with a second locking element (12) of said second locking means and a second locking unit (4) provided with a further first locking element (111) of said first locking means and with a further second locking element (112) of said second locking means, said first locking unit (3) and said second locking unit (4) being movable towards and away from one another, said apparatus further comprising electric energy dispensing means (62) having pole means (63) connected to said first locking element (11) and further pole means (64) connected to said further first locking element (111), **characterised in that** said driving means comprises eccentric driving means (13).

2. Welding apparatus according to claim 1, wherein said eccentric driving means comprises shaft means (17, 17a) provided with eccentric pin means (31, 33) rotatably received in seat means (40, 44) of said second locking means (12, 112).

3. Welding apparatus according to claim 2, wherein said eccentric pin means comprises a first eccentric pin (31) received in a first seat (40) of said seat means and a second eccentric pin (33) received in a second seat (44) of said seat means.

4. Welding apparatus according to claim 3, wherein said first eccentric pin (31) has a diameter that is less than a further diameter of said second eccentric pin (33).

5. Welding apparatus according to claim 4, wherein said shaft means (17, 17a) has a still further diameter that is greater than said diameter and less than said further diameter.

6. Welding apparatus according to any one of claims 2 to 5, wherein said shaft means (17, 17a) is rotatable around rotation axis means (R), said eccentric pin means (31, 33) being provided with longitudinal axis means (R1) substantially parallel to said rotation axis means (R) and spaced from said rotation axis means by a set distance (D).

7. Welding apparatus according to any one of claims 2 to 6, and further comprising actuating means (15) arranged for rotating said shaft means (17, 17a) with respect to supporting means (18, 19) with which said first locking means (11, 111) is provided.

8. Welding apparatus according to claim 7, and further comprising lever means (24, 24a) interposed between said shaft means (17, 17a) and said actuating means (15).

9. Welding apparatus according to any one of claims 2 to 8, wherein said shaft means comprises a first shaft (17) and a second shaft (17a) arranged substantially parallel to one another.

10. Welding apparatus according to claim 9 as appended to claim 8, wherein said lever means comprises a first lever (24) fixed to said first shaft (17) and a second lever (24a) fixed to said second shaft (17a).

11. Welding apparatus according to any preceding claim, wherein said second locking means (12, 112) comprises guide surface means (66, 67) arranged for interacting with further guide surface means of supporting element means (18, 19) of said locking device (2) for guiding said second locking means (12, 112) when said first locking means (11, 111) and said second locking means (12, 112) pass from said open configuration (Y) to said closed configuration (X).

12. Welding apparatus according to claim 11, as appended to any one of claims 2 to 10, wherein said further guide surface means is defined in bush means (21, 23) interposed between said shaft means (17, 17a) and said supporting element means (18, 19).

13. Welding apparatus according to any preceding claim, and further comprising positioning means (50) arranged for maintaining said first locking means (11, 111) and said second locking means (12, 112) in said open configuration (Y).

14. Welding apparatus according to claim 13, wherein said positioning means (50) comprises first cavity means (51) associated with a frame (18, 19) of said locking device (2), second cavity means (52) associated with said eccentric driving means (13) and elongated body means (53) that is movable with respect to said first cavity means (51) and with respect to said second cavity means (52), said elongated body means (53), in a working configuration (K), engaging said first cavity means (51) and said second cavity means (52) to prevent said second locking means (12, 112) from moving with respect to said frame (18, 19).

## Patentansprüche

1. Schweißvorrichtung mit einer Festhalteeinrichtung (2), die erste Festhaltemittel (11, 111) und zweite Festhaltemittel (12, 112) aufweist, die zwischen einer offenen Einstellung (Y), in der zwischen den ersten Festhaltemitteln (11, 111) und den zweiten Festhaltemitteln (12, 112) ein Objekt (5) positionierbar ist, und einer geschlossenen Einstellung (X), in der die ersten Festhaltemittel (11, 111) und die zweiten Festhaltemittelmittel (12, 112) das Objekt festhalten, beiderseits bewegbar sind, und mit Antriebsmitteln, die dafür ausgebildet sind, die ersten Festhaltemittel (11, 111) und die zweiten Festhaltemittel (12, 112) zwischen der offenen Einstellung (Y) und der geschlossenen Einstellung (X) zu bewegen, wobei die Festhalteeinrichtung (2) eine erste Festhalteeinheit (3) aufweist, die mit einem ersten Festhalteelement (11) der ersten Festhaltemittel und mit einem zweiten Festhalteelement (12) der zweiten Festhaltemittel ausgestattet ist, und eine zweite Festhalteeinheit (4), die mit einem weiteren ersten Festhalteelement (111) der ersten Festhaltemittel und einem weiteren zweiten Festhalteelement (112) der zweiten Festhaltemittel ausgestattet ist, wobei die erste Festhalteeinheit (3) und die zweite Festhalteeinheit (4) aufeinander zu und voneinander weg bewegt werden können, und wobei die Vorrichtung des Weiteren Abgabemittel (62) für elektrische Energie aufweist, die Polmittel (63) aufweisen, die mit dem ersten Festhalteelement (11) verbunden sind, und weitere Polmittel (64), die mit dem weiteren ersten Festhaltelement (111) verbunden sind, **dadurch gekennzeichnet, dass** die Antriebsmittel exzentrische Antriebsmittel (13) aufweisen.

2. Schweißvorrichtung nach Anspruch 1, wobei die exzentrischen Antriebsmittel Schaftmittel (17, 17a) aufweisen, die mit exzentrischen Stiftmitteln (31, 33) ausgestattet sind, die drehbar in den Sitzmitteln (40, 44) der zweiten Festhaltemittel (12, 112) aufgenommen sind.

3. Schweißvorrichtung nach Anspruch 2, wobei die exzentrischen Stiftmittel einen ersten exzentrischen Stift (31), der in einem ersten Sitz (40) der Sitzmittel aufgenommen ist, und einem zweiten exzentrischen Pin (33) aufweisen, der in einen zweiten Sitz (44) der Sitzmittel aufgenommen ist.

4. Schweißvorrichtung nach Anspruch 3, wobei der erste exzentrische Stift (31) einen Durchmesser hat, der kleiner ist als ein weiterer Durchmesser des zweiten exzentrischen Stifts (33).

5. Schweißvorrichtung nach Anspruch 4, wobei die Schaftmittel (17, 17a) noch einen weiteren Durchmesser haben, der größer ist als der Durchmesser und kleiner ist als der weitere Durchmesser.

6. Schweißvorrichtung nach einem der Ansprüche 2 bis 5, wobei die Schaftmittel (17, 17a) um Rotationsachsenmittel (R) rotierbar sind, wobei die exzentrischen Stiftmittel (31, 33) mit Längsachsenmitteln (R1) ausgestattet sind, die im Wesentlichen parallel zu den Rotationsachsenmitteln (R) sind, und von den Rotationsachsenmitteln um einen Abstand (D) beabstandet sind.

7. Schweißvorrichtung nach einem der Ansprüche 2 bis 6, ferner mit Betätigungsmitteln (15), die dafür ausgebildet sind, die Schaftmittel (17, 17a) in Bezug auf Tragmittel (18, 19) zu drehen, mit denen die ersten Festhaltemittel (11, 111) ausgestattet sind.

8. Schweißvorrichtung nach Anspruch 7, ferner mit Hebelmitteln (24, 24a), die zwischen den Schaftmitteln (17, 17a) und den Betätigungsmitteln (15) angeordnet sind.

9. Schweißvorrichtung nach einem der Ansprüche 2 bis 8, wobei die Schaftmittel einen ersten Schaft (17) und einen zweiten Schaft (17a) aufweisen, die im Wesentlichen parallel zueinander angeordnet sind.

10. Schweißvorrichtung nach Anspruch 9, rückbezogen auf Anspruch 8, wobei die Hebelmittel einen ersten Hebel (24), der mit dem ersten Schaft (17) verbunden ist, und einem zweiten Hebel (24a) aufweisen, der mit dem zweiten Schaft (17a) verbunden ist.

11. Schweißvorrichtung nach einem der vorhergehenden Ansprüche, wobei die zweiten Festhaltemittel (12, 112) ein Führungsoberflächenmittel (66, 67) aufweisen, das dafür ausgebildet ist, mit weiteren Führungsoberflächenmitteln der Tragelementemittel (18, 19) der Festhalteeinrichtung (2) zusammenzuwirken, um die zweiten Festhaltemittel (12, 112) zu führen, wenn die ersten Festhaltemittel (11, 111) und die zweiten Festhaltemittel (12, 112) sich von der offenen Einstellung (Y) in die geschlossene Einstellung (X) übergehen.

12. Schweißvorrichtung nach Anspruch 11, rückbezogen auf einen der Ansprüche 2 bis 10, wobei die weiteren Führungsoberflächenmitteln als Lagermittel (21, 23) definiert sind, die zwischen den Schaftmitteln (17, 17a) und den Tragelementmitteln (18, 19) angeordnet sind.

13. Schweißvorrichtung nach einem der vorhergehenden Ansprüche, ferner mit Positioniermitteln (50), die dafür ausgebildet sind, die ersten Festhaltemittel (11, 111) und die zweiten Festhaltemittel (12, 112) in der offenen Einstellung (Y) zu halten.

14. Schweißmittel nach Anspruch 13, wobei die Positioniermittel (50) erste Ausnehmungsmittel (51) aufweisen, die einem Rahmen (18, 19) der Festhalteeinrichtung (2) zugeordnet sind, zweite Ausnehmungsmittel (52), die den exzentrischen Antriebsmitteln (13) zugeordnet sind und länglichen Körpermitteln (53), die in Bezug auf die ersten Ausnehmungsmittel (51) und in Bezug auf die zweiten Ausnehmungsmittel (52) beweglich sind, wobei die länglichen Körpermittel (53) in einer Arbeitseinstellung (K) mit den ersten Ausnehmungsmitteln (51) und den zweiten Ausnehmungsmitteln (52) zusammenwirken, um zu verhindern, dass sich die zweiten Festhaltemittel (12, 112) in Bezug auf den Rahmen (18, 19) bewegen.

## Revendications

1. Appareil de soudage, comprenant un dispositif de blocage (2) pourvu de premiers moyens de blocage (11, 111) et de deuxièmes moyens de blocage (12, 112) mobiles l'un par rapport à l'autre entre une configuration ouverte (Y), dans laquelle un objet (5) est positionnable entre lesdits premiers moyens de blocage (11, 111) et lesdits deuxièmes moyens de blocage (12, 112), et une configuration fermée (X), dans laquelle lesdits premiers moyens de blocage (11, 111) et lesdits deuxièmes moyens de blocage (12, 112) bloquent ledit objet (5), et avec des moyens d'entraînement prévus pour déplacer lesdits premiers moyens de blocage (11, 111) et lesdits deuxièmes moyens de blocage (12, 112) entre ladite configuration ouverte (Y) et ladite configuration fermée (X), ledit dispositif de blocage (2) comprenant une première unité de blocage (3) pourvue d'un premier élément de blocage (11) desdits premiers moyens de blocage et d'un deuxième élément de blocage (12) desdits deuxièmes moyens de blocage, et une deuxième unité de blocage (4) pourvue d'un autre premier élément de blocage (111) desdits premiers moyens de blocage et d'un autre deuxième élément de blocage (112) desdits deuxièmes moyens de blocage, ladite première unité de blocage (3) et ladite deuxième unité de blocage (4) étant mobiles de manière à être rapprochées et éloignées l'une de l'autre, ledit appareil comprenant de plus des moyens (62) d'alimentation en énergie électrique ayant des moyens de pôle (63) reliés audit premier élément de blocage (11) et d'autres moyens de pôle (64) reliés audit autre premier élément de blocage (111), ***caractérisé en ce que*** lesdits moyens d'entraînement comprennent des moyens d'entraînement (13) à excentrique.

2. Appareil de soudage selon la revendication 1, dans lequel lesdits moyens d'entraînement à excentrique comprennent des moyens d'arbre (17, 17a) pourvus de moyens de cheville excentrique (31, 33) reçus de manière rotative dans des moyens de siège (40, 44) desdits deuxièmes moyens de blocage (12, 112).

3. Appareil de soudage selon la revendication 2, dans lequel lesdits moyens de cheville excentrique comprennent une première cheville excentrique (31) reçue dans un premier siège (40) desdits moyens de siège et une deuxième cheville excentrique (33) reçue dans un deuxième siège (44) desdits moyens de siège.

4. Appareil de soudage selon la revendication 3, dans lequel ladite première cheville excentrique (31) a un diamètre qui est inférieur à un autre diamètre de ladite deuxième cheville excentrique (33).

5. Appareil de soudage selon la revendication 4, dans lequel lesdits moyens d'arbre (17, 17a) ont encore un autre diamètre qui est supérieur audit diamètre et inférieur audit autre diamètre.

6. Appareil de soudage selon l'une quelconque des revendications 2 à 5, dans lequel lesdits moyens d'arbre (17, 17a) sont rotatifs autour d'un moyen d'axe de rotation (R), lesdits moyens de cheville excentrique (31, 33) présentant des moyens d'axe longitudinal (R1) sensiblement parallèles auxdits moyens d'axe de rotation (R) et espacés desdits moyens d'axe de rotation d'une distance donnée (D).

7. Appareil de soudage selon l'une quelconque des revendications 2 à 6, et comprenant de plus des moyens d'actionnement (15) prévus pour entraîner en rotation lesdits moyens d'arbre (17, 17a) en relation avec des moyens de support (18, 19) dont sont munis lesdits premiers moyens de verrouillage (11, 111).

8. Appareil de soudage selon la revendication 7, et comprenant de plus des moyens de levier (24, 24a) interposés entre lesdits moyens d'arbre (17, 17a) et lesdits moyens d'actionnement (15).

9. Appareil de soudage selon l'une quelconque des revendications 2 à 8, dans lequel lesdits moyens d'arbre comprennent un premier arbre (17) et un deuxième arbre (17a) disposés de manière sensiblement parallèle l'un par rapport à l'autre.

10. Appareil de soudage selon la revendication 9 lorsqu'elle est dépendante de la revendication 8, dans lequel lesdits moyens de levier comprennent un premier levier (24) fixé audit premier arbre (17) et un deuxième levier (24a) fixé audit deuxième arbre (17a).

11. Appareil de soudage selon l'une quelconque des revendications précédentes, dans lequel lesdits deuxièmes moyens de blocage (12, 112) comprennent des moyens de surface de guidage (66, 67) prévus pour interagir avec d'autres moyens de surface de guidage des moyens d'élément de support (18, 19) dudit dispositif de blocage (2) afin de guider lesdits deuxièmes moyens de blocage (12, 112) lorsque lesdits premiers moyens de blocage (11, 111) et lesdits deuxièmes moyens de blocage (12, 112) passent de ladite configuration ouverte (Y) à ladite configuration fermée (X).

12. Appareil de soudage selon la revendication 11 lorsqu'elle est dépendante de l'une quelconque des revendications 2 à 10, dans lequel lesdits autres moyens de surface de guidage sont définis comme des moyens de douille (21, 23) interposés entre lesdits moyens d'arbre (17, 17a) et lesdits moyens d'élément de support (18, 19).

13. Appareil de soudage selon l'une quelconque des revendications précédentes, et comprenant de plus des moyens de positionnement (50) prévus pour maintenir lesdits premiers moyens de blocage (11, 111) et lesdits deuxièmes moyens de blocage (12, 112) dans ladite configuration ouverte (Y).

14. Appareil de soudage selon la revendication 13, dans lequel lesdits moyens de positionnement (50) comprennent des premiers moyens de cavité (51) associés à un bâti (18, 19) dudit dispositif de blocage (2), des deuxièmes moyens de cavité (52) associés auxdits moyens d'entraînement à excentrique (13) et des moyens de corps allongé (53) qui sont mobiles par rapport auxdits premiers moyens de cavité (51) et par rapport auxdits deuxièmes moyens de cavité (52), lesdits moyens de corps allongé (53), dans une configuration de travail (K), s'engageant dans lesdits premiers moyens de cavité (51) et lesdits deuxièmes moyens de cavité (52) pour empêcher lesdits deuxièmes moyens de blocage (12, 112) de se mouvoir par rapport audit bâti (18, 19).
